# EUROPEAN PATENT SPECIFICATION

(11) **EP 1 214 104 B1**
(45) Date of publication and mention of the grant of the patent: **26.05.2004**
(21) Application number: 00964393.3
(22) Date of filing: 21.09.2000
(51) Int. Cl.: A61L 2/23, A61L 9/012, A61L 11/00

(54) **STERILISING AGENTS AND METHODS**
STERILISATIONSMITTEL UND -VERFAHREN
AGENTS ET PROCEDES DE STERILISATION

(30) Priority: 23.09.1999 GB 9922415
(43) Date of publication of application: 19.06.2002
(60) Divisional application: 04005950.3
(73) Proprietor: Allied Bio Corproation Limited, Oldham, Lancashire OL8 1QG (GB)
(72) Inventor: HALLIWELL, Larry, Dukinfield, Cheshire SK16 5HT (GB); LATHAM, George, Springhead, Oldham OL4 5UB (GB); PEEL, Adrian, Royton OL2 6EU (GB)
(74) Representative: Brandon, Paul Laurence
(86) International application number: PCT/GB2000/003616
(87) International publication number: WO 2001/021224

(56) References cited:
- EP-A- 0 431 844
- WO-A-94/10233
- FR-A- 2 536 045

## Description

This invention relates to sterilising agents, in particular to those which, when activated, form sulphur dioxide, and also to a method of sterilising substantially enclosed airspaces.

It is well known to use sterilising agents which form sulphur dioxide to sterilise enclosed spaces. Such agents have been used in a wide variety of applications including sterilisation of fermentation bins and sanitary bins.

In the case of fermentation bins, granules or tablets of the sterilising agent are dissolved rapidly in water in the fermentation bin, which quickly releases large quantities of sulphur dioxide for fast sterilisation.

In the case of sanitary bins, where there is only a small amount of moisture in the air and/or materials inside the bin, it is usual to add a portion of the sterilising agent in powder or granule form. The powder or granules have a large surface area which enables activation by the available moisture to form a sufficient amount of sulphur dioxide for sterilisation.

The powder or granules are usually added by sprinkling them on the bottom of the container, either from a porous container or by opening individual sachets of sterilising agent and pouring the powder or granules into the container.

However, when the sterilising agent is applied in this manner a certain amount of dust from the powder or granules is generated, which can be harmful to a user if inhaled. People with bronchial afflictions, such as asthma, may be especially vulnerable to adverse effects from the dust.

Some sterilising agents for sanitary bins, enclosed spaces and the like are delivered as powder or granules in porous sachets, which allow moisture to penetrate the sachet and sulphur dioxide generated to diffuse out into the bins. However this method of delivery does not prevent all the dust generated by the powder or granules inside the sachet from escaping into the surrounding atmosphere, creating a hazard to the user. Such dust and/or powder release is hazardous to people, particularly those with bronchial complaints, for example asthmatics. Furthermore, the porous sachets are prone to tearing.

It is therefore an object of preferred embodiments of the present invention to provide a sterilising agent which forms sulphur dioxide upon activation with available moisture, in a form which does not produce harmful dust during insertion into an enclosed space.

It is a further object of preferred embodiments of the present invention to provide a sterilising agent which releases sulphur dioxide over a prescribed period of time for efficient sterilisation, for a particular application.

Therefore, according to a first aspect of the present invention there is provided a sterilising block comprising a sterilising composition for use in an airspace within a container, the sterilising composition comprising a sulphur dioxide activating compound, wherein moisture absorbed by the block reacts with the sulphur dioxide activating compound to form sulphur dioxide, and wherein the sterilising composition further comprises a water soluble organic acid and a corresponding water soluble salt of the organic acid.

Suitably the water soluble organic acid and water soluble salt of the organic acid are water soluble at ambient temperature.

The water soluble organic acid and corresponding salt act to inhibit the release of sulphur dioxide from the sterilising composition. While the applicant is not limited by any theoretical explanation, it is believed the water soluble acid and salt act as a buffer to inhibit formation of sulphur dioxide, thus prolonging the term of action of the composition. Thus the term "water-soluble" relates to the organic acid and corresponding salt being sufficiently soluble in water at ambient temperature to act as a buffer, in the composition of the present invention, as moisture is absorbed by the block.

Preferably the water soluble organic acid and corresponding salt maintain the sterilising block, as moisture is absorbed, at a pH of not more than 7.5, more preferably at a pH not more than 6.5. Preferably the water soluble organic acid and corresponding salt maintain the sterilising block, as moisture is absorbed, at a pH of not less than 3.5, more preferably not less than 4.5 and most preferably not less than 5.5. A preferred pH range is 5.5. - 6.5.

Suitably the organic acid is a water soluble organic acid comprising 1 to 3 carboxylic acid groups, or anhydrides thereof. Alternatively the organic acid may be ascorbic acid.

Preferred water soluble organic acids include lactic acid, malic acid, fumaric acid, pyruvic acid, succinic acid, ascorbic acid and citric acid, of which citric acid and malic acid are most preferred.

Suitably the organic acid and corresponding salt each comprise 1-12 carbon atoms, preferably 1-9 carbon atoms, more preferably 1-6 carbon atoms.

The corresponding salts of the water soluble acid include magnesium, sodium and potassium salts. Preferred corresponding salts of malic acid or citric acid are sodium malate and sodium citrate respectively.

Suitably the water soluble organic acid comprises at least 1%wt of the total weight of the sterilising composition, more preferably at least 2% wt, as added to the sterilising composition. Preferably the water soluble organic acid comprises no more than 10% wt of the total weight of the sterilising composition, more preferably no more than 5% wt.

Suitably the corresponding salt of the organic acid comprises at least 1%wt of the total weight of the sterilising composition, more preferably at least 2%wt.

Preferably the corresponding salt of the organic acid comprises no more than 10% wt of the total weight of the sterilising composition, more preferably no more than 5% wt.

Thus the preferred range of the water soluble organic acid and the corresponding salt, combined, is 4-10%wt of the total weight of the sterilising composition.

Most preferably the water soluble organic acid and the corresponding salt of the organic acid comprise equal amounts in the total weight of the sterilising composition.

All amounts described herein are a %wt of the total weight of the sterilising composition as added in the form of raw ingredients. It is understood that once the sterilising block absorbs moisture, the relative portions of the individual components of the composition may change, for example the organic acid and/or salt may dissociate in solution, and the proportion of sulphur dioxide activating compound will decrease on evolution of sulphur dioxide.

According to a second aspect of the present invention there is provided a sterilising block comprising a sterilising composition for use in an airspace within a container, the sterilising composition comprising a sulphur dioxide activating compound, wherein moisture absorbed by the block reacts with the sulphur dioxide activating compound to form sulphur dioxide and wherein the sterilising composition further comprises a hygroscopic compound.

It is believed that the hygroscopic compound increases the rate of release of sulphur dioxide from the sterilising agent by increasing the rate of uptake of moisture into the sterilising block. The hygroscopic compound enables the sterilising composition to be manufactured in a block with limited surface area for use in an airspace which is low in moisture, as it will enable the block to absorb a sufficient amount of moisture from the air and/or waste materials within the airspace to activate the sulphur dioxide activating compound.

Preferably the hygroscopic compound is a hygroscopic alkylbenzenesulphonate, or dialkylbenzenesulphonate However, other types of hygroscopic material may be used.

A preferred dialkylbenzenesulphonate is diisopropylbenzenesulphonate.

Preferably the hygroscopic compound comprises at least 0.5%wt of the total weight of the sterilising agent, more preferably at least 1%wt.

Preferably the hygroscopic compound comprises no more than 5%wt of the total weight of the sterilising agent, more preferably no more than 2.5% wt.

Thus a preferred range for the hygroscopic compound is 1-2.5%wt of the total weight of the sterilising composition.

The block should be such that it produces an insubstantial amount, and preferably no, harmful dust when inserted into the airspace.

Suitably the block is a tablet or solid gel block. Preferably it is a tablet of consolidated powder or granules.

The sulphur dioxide may, preferably, be in gaseous form and/or may dissolve in water or an aqueous medium present in the air space, and so act, in the form of sulphurous acid or a salt thereof, as a liquid sterilising composition. It will be understood that further volatile compounds of sulphur may be formed, in addition to sulphur dioxide.

Preferably the sterilising composition comprises a polyglycol compound, more preferably a polyethylene glycol compound.

Suitably the polyglycol compound comprises at least 0.5%wt of the total weight of the sterilising composition, preferably at least 1%wt, as added to the sterilising composition.

Preferably the polyglycol compound comprises no more than 10%wt of the total weight of the sterilising composition, more preferably no more than 5% wt, as added to the sterilising composition.

Suitably the sulphur dioxide activating compound is a metabisulphite, preferably sodium metabisulphite or potassium metabisulphite.

Preferably the sulphur dioxide activating compound comprises at least 50% wt of the total weight of the sterilising composition, more preferably at least 60% wt.

Suitably the sulphur dioxide activating compound comprises no more than 95% wt of the total weight of the sterilising composition, preferably no more than 90% wt, more preferably no more than 80% wt.

The sterilising composition may additionally comprise one or more ancilliary ingredients, including a fragrance, a colouring compound, talc, sodium chloride, and a filler.

Suitably each block is supplied in its own sealed space. For example it may be individually wrapped or provided in "blister pack" form.

Alternatively blocks may be packaged together, preferably in a sealed container containing, separately, a hygroscopic agent (for example silica gel) able preferentially to absorb atmospheric moisture, and so prevent premature activation of the sulphur dioxide activating compound. Such a hygroscopic agent may also be employed when each block is supplied in its own sealed space. Thus, the sterilising blocks may be kept in an inactive form until needed, prolonging their shelf-life and subsequent utility.

Preferably the container is generally enclosed. Preferably the container is used for deposit or storage of contaminated, or more preferably biological materials, for example biological soils, microorganisms, or biological waste products. Preferably the container is a sanitary bin.

Alternatively, the container may be a medical dressing container, a nappy bin, a used sharps bin, a post box, a refrigerator, a body bag or a container used for the disposal or containment of any contaminated or, preferably, biological waste.

When the container is a food refrigerator, the block is preferably placed in a non-airtight container to prevent accidental contact with food contained within the refrigerator.

The invention also provides a method of sterilising an airspace comprising the use of a block as described and defined above.

The following examples better serve to illustrate preferred embodiments of the present invention.

### Example 1

A tablet of compressed granules was prepared using the following ingredients in the proportions given:

| | % wt of total weight of composition |
|---|---|
| Citric acid | 2.5 |
| Sodium citrate | 2.5 |
| Polyethylene glycol (PEG6000) | 2.0 |
| Talc | 1.0 |
| Sodium metabisulphite | 73.2 |
| Perfume | 0.8 |
| Sodium chloride | 18.0 |

The dry ingredients were mixed together, with the exception of the perfume, which was subsequently sprayed onto the mixed ingredients. The composition was then granulated and fed into a die wherein the granules were compressed into tablet form by a press having a force of 8 tons.

### Example 2

The method of Example 1 was repeated for the following composition:

| | % wt of total weight of composition |
|---|---|
| Corn starch | 1.5 |
| Sodium di-isopropylbenzene sulphonate | 1.0 |
| Polyethylene glycol (PEG 6000) | 2.0 |
| Talc | 1.0 |
| Sodium metabisulphite | 75.7 |
| Perfume | 0.8 |
| Sodium chloride | 18.0 |

Both compositions are of utility in effectively sterilising an airspace within a container. The composition of Example 1 is particularly useful for containers in which there is a relatively large amount of moisture or moist contaminant present, with the buffering action of the organic acid and corresponding salt components moderating the release of sulphur dioxide.

The composition of Example 2 is particularly useful in sterilising airspaces within containers that contain a relatively low amount of moisture, or contain contaminated materials that are relatively dry.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A sterilising block comprising a sterilising composition for use in an airspace within a container, the sterilising composition comprising a sulphur dioxide activating compound, wherein moisture absorbed by the block reacts with the sulphur dioxide activating compound to form sulphur dioxide, **characterised in that** the sterilising composition further comprises a water soluble organic acid and a corresponding water soluble salt of the organic acid.

2. A sterilising block as claimed in claim 1, wherein the water soluble organic acid and the corresponding water soluble salt of the organic acid each comprise 2-5% wt of the total weight of the sterilising composition.

3. A sterilising block as claimed in claim 1, wherein the water soluble organic acid comprises 1 to 3 carboxylic acid groups, and the corresponding salt is selected from the group consisting of a magnesium, sodium and potassium salt.

4. A sterilising block as claimed in any preceding claims, wherein the block is a solid gel block or is a tablet of consolidated powder or granules.

5. A sterilising block as claimed in any preceding claim, wherein the sulphur dioxide activating compound is a metabisulphite.

6. A sterilising block as claimed in claim 5, wherein the metabisulphite is sodium metabisulphite or potassium metabisulphite.

7. A sterilising block as claimed in any preceding claim, wherein the container is a sanitary bin, a medical dressing container, a nappy bin, a used sharps bin, a post box, a refrigerator, a body bag or a container used for the disposal or containment of any biological waste.

8. A method of sterilising an airspace comprising the use of a block of any of claims 1 to 7.

## Patentansprüche

1. Ein sterilisierender Block, der eine sterilisierende Zusammensetzung zur Verwendung in einem Luftraum innerhalb eines Behälters umfasst, wobei die sterilisierende Zusammensetzung eine Schwefeldioxid-aktivierende Verbindung umfasst, wobei Feuchtigkeit, die durch den Block absorbiert wird, mit der Schwefeldioxid-aktivierenden Verbindung reagiert, um Schwefeldioxid auszubilden, dadurch charakterisiert, dass die sterilisierende Zusammensetzung zusätzlich eine wasserlösliche organische Säure und ein korrespondierendes wasserlösliches Salz der organischen Säure umfasst.

2. Ein sterilisierender Block, wie er in Anspruch 1 beansprucht wird, worin die wasserlösliche organische Säure und das korrespondierende wasserlösliche Salz der organischen Säure jeweils 2 - 5 Gew.-% des Gesamtgewichts der sterilisierenden Zusammensetzung umfassen.

3. Ein sterilisierender Block, wie er in Anspruch 1 beansprucht wird, worin die wasserlösliche organische Säure 1 - 3 Carbonsäuregruppen umfasst und das korrespondierende Salz aus der Gruppe, die aus einem Magnesium-, Natriumund Kaliumsalz besteht, ausgewählt ist.

4. Ein sterilisierender Block, wie in einem der vorangegangenen Ansprüche beansprucht wird, worin der Block ein fester Gelblock ist oder eine Tablette aus verfestigtem Pulver oder Körnern ist.

5. Ein sterilisierender Block, wie in einem der vorangegangenen Ansprüche beansprucht wird, worin die Schwefeldioxid-aktivierende Verbindung ein Metabisulfit ist.

6. Ein sterilisierender Block, wie er in Anspruch 5 beansprucht wird, worin das Metabisulfit Natriummetabisulfit oder Kaliummetabisulfit ist.

7. Ein sterilisierender Block, wie er in einem der vorangegangenen Ansprüche beansprucht wird, wobei der Behälter ein Sanitärbehälter, ein Behälter für medizinische Verbände, ein Windelbehälter, ein Behälter für benutzte scharfe Gegenstände, ein Postkasten, ein Kühlschrank, ein Körpersack oder ein Behälter, der zur Entsorgung oder Aufbewahrung jeglichen biologischen Abfalls verwendet wird, ist.

8. Ein Verfahren zur Sterilisierung eines Luftraums, das die Verwendung eines Blocks nach einem der Ansprüche 1 - 7 umfasst.

## Revendications

1. Bloc stérilisant comprenant une composition stérilisante destiné à être utilisé dans un espace d'air à l'intérieur d'un récipient, la composition stérilisante comprenant un composé d'activation de dioxyde de soufre, l'humidité absorbée par le bloc réagissant avec le composé d'activation de dioxyde de soufre pour former du dioxyde de soufre, **caractérisé par le fait que** la composition stérilisante comprend en outre un acide organique soluble dans l'eau et un sel soluble dans l'eau correspondant de cet acide organique.

2. Bloc stérilisant selon la revendication 1, dans lequel l'acide organique soluble dans l'eau et le sel soluble dans l'eau correspondant de cet organique représentent chacun de 2 à 5 % en poids du poids total de la composition stérilisante.

3. Bloc stérilisant selon la revendication 1, dans lequel l'acide organique soluble dans l'eau contient de 1 à 3 groupes acides carboxyliques et le sel correspondant est choisi dans le groupe constitué d'un sel de magnésium, un sel de sodium et un sel de potassium.

4. Bloc stérilisant selon l'une des revendications précédentes, qui est un bloc de gel solide ou un comprimé de poudre ou de granulés consolidés.

5. Bloc stérilisant selon l'une des revendications précédentes, dans lequel le composé d'activation de dioxyde de soufre est un métabisulfite.

6. Bloc stérilisant selon la revendication 5, dans lequel le métabisulfite est le métabisulfite de sodium ou le métabisulfite de potassium.

7. Bloc stérilisant selon l'une des revendications précédentes, pour lequel le récipient est une poubelle sanitaire, un récipient à vêtements médicaux, une poubelle à couches, une poubelle à objets pointus usés, une boîte aux lettres, un réfrigérateur, un sac de corps ou un récipient utilisé pour jeter ou destiné à contenir des déchets biologiques.

8. Procédé de stérilisation d'un espace d'air comprenant l'utilisation d'un bloc selon l'une des revendications 1 à 7.
